(19) Europäisches Patentamt
European Patent Office
Office européen des brevets

(11) **EP 4 606 623 A1**

(12) **EUROPEAN PATENT APPLICATION**

(43) Date of publication:
**27.08.2025 Bulletin 2025/35**

(21) Application number: **25155627.0**

(22) Date of filing: **03.02.2025**

(51) International Patent Classification (IPC):
**B60L 15/20** (2006.01)    **B60W 50/08** (2020.01)

(52) Cooperative Patent Classification (CPC):
**B60L 15/20; B60W 50/082; B60W 50/085;**
B60L 2240/12; B60L 2240/14; B60L 2240/423;
B60L 2250/12; B60L 2250/16; B60L 2250/18;
B60L 2250/26; B60L 2250/28

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.02.2024 JP 2024024657**

(71) Applicant: **TOYOTA JIDOSHA KABUSHIKI KAISHA**
**Aichi-Ken 471-8571 (JP)**

(72) Inventors:
• **ASAHARA, Norimi**
  **TOYOTA-SHI, AICHI-KEN, 471-8571 (JP)**
• **FUJII, Kazuki**
  **TOYOTA-SHI, AICHI-KEN, 471-8571 (JP)**
• **KANEKO, Satoshi**
  **TOYOTA-SHI, AICHI-KEN, 471-8571 (JP)**

(74) Representative: **Cabinet Beau de Loménie**
  **103, rue de Grenelle**
  **75340 Paris Cedex 07 (FR)**

(54) **BATTERY ELECTRIC VEHICLE**

(57)    A battery electric vehicle (100) includes an electric motor (2), a driving operation member (22, 24), a storage device (103) configured to store a database, and a processing circuit (102). The database is configured to manage a plurality of vehicle models obtained by modeling a plurality of virtual vehicles having different acceleration characteristics in response to a driving operation of a driver. The processing circuit (102) is configured to read out a target vehicle model corresponding to a target virtual vehicle selected by the driver from the database and to calculate a virtual acceleration of the target virtual vehicle using the target vehicle model. The processing circuit (102) is configured to calculate an adjusted virtual acceleration by multiplying the virtual acceleration by a coefficient of 1 or less according to the acceleration characteristic of the target virtual vehicle and to control the electric motor (2) such that an acceleration of the battery electric vehicle (100) is the adjusted virtual acceleration.

FIG. 6

EP 4 606 623 A1

**Description**

1. Field of the Invention

The present disclosure relates to a battery electric vehicle having an electric motor as a drive source.

2. Description of Related Art

An electric motor controls a voltage or magnetic field to be applied to enable control such that a desired motor torque is output. There is a technique of controlling an electric motor of a battery electric vehicle as appropriate by using the above to reproduce various driving feelings in the battery electric vehicle. For example, Japanese Patent No. 6787507 (JP 6787507 B) discloses a technique of reproducing, in the battery electric vehicle, a driving feeling due to a manual shift operation of a manual transmission vehicle in a pseudo manner.

SUMMARY OF THE INVENTION

As one of factors that characterize the driving feeling of each vehicle, there is a sense of acceleration of the vehicle in response to a driving operation. The sense of acceleration of the vehicle is an important point when a driver feels fun in driving the vehicle. In particular, the preference for the sense of acceleration of the vehicle is different for each driver. Further, the driver may want to enjoy various senses of acceleration of the vehicle according to the mood.

In the present disclosure, a technique is studied in which a virtual acceleration when a virtual vehicle is driven by using a vehicle model is calculated and an electric motor is controlled to realize the calculated virtual acceleration in a battery electric vehicle. The vehicle model can be provided to each of a plurality of virtual vehicles. Therefore, with the technique, it is possible to reproduce the sense of acceleration of the virtual vehicles in one battery electric vehicle in a pseudo manner.

However, an acceleration that can be realized by the battery electric vehicle is naturally limited in relation to an output characteristic of a motor torque of the electric motor of the battery electric vehicle. For this reason, in a case of the virtual vehicle having an acceleration characteristic exceeding an acceleration capability of the battery electric vehicle, a situation occurs in which the acceleration characteristic cannot be realized as it is in the battery electric vehicle. As a result, there is a problem that the sense of acceleration of such a virtual vehicle cannot be reproduced in the battery electric vehicle. On the other hand, an increase in the acceleration capability of the battery electric vehicle to realize the acceleration characteristic of such a virtual vehicle causes the cost of the battery electric vehicle to be unnecessarily increased.

The present disclosure provides a battery electric vehicle that reproduce a sense of acceleration of a virtual vehicle having an acceleration characteristic exceeding an acceleration capability of the battery electric vehicle.

A battery electric vehicle according to a first aspect of the present disclosure includes an electric motor as a drive source, a driving operation member used for driving of the battery electric vehicle, a storage device configured to store a database, and a processing circuit. The database is configured to manage a plurality of vehicle models obtained by modeling a plurality of virtual vehicles having different acceleration characteristics in response to a driving operation of a driver. The processing circuit is configured to read out a target vehicle model corresponding to a target virtual vehicle from the database. The target virtual vehicle is selected by the driver from the virtual vehicles. The processing circuit is configured to calculate a virtual acceleration of the target virtual vehicle in response to an operation of the driving operation member using the target vehicle model based on an operation state of the driving operation member and a traveling state of the battery electric vehicle. The processing circuit is configured to execute adjustment processing of calculating an adjusted virtual acceleration by multiplying the virtual acceleration by a coefficient of 1 or less according to the acceleration characteristic of the target virtual vehicle. The processing circuit is configured to control the electric motor such that an acceleration of the battery electric vehicle is the adjusted virtual acceleration.

In the battery electric vehicle according to the first aspect of the present disclosure, in the adjustment processing, the processing circuit may be configured to set the coefficient to a value obtained by dividing a realizable maximum acceleration of the battery electric vehicle by a maximum acceleration in the acceleration characteristic of the target virtual vehicle when the acceleration characteristic of the target virtual vehicle exceeds an acceleration capability of the battery electric vehicle.

In the battery electric vehicle according to the first aspect of the present disclosure, in the adjustment processing, the processing circuit may be configured to set the coefficient to 1 when the acceleration characteristic of the target virtual vehicle does not exceed an acceleration capability of the battery electric vehicle.

In the battery electric vehicle according to the first aspect of the present disclosure, in the adjustment processing, the processing circuit may be configured to set the coefficient to 1 while the virtual acceleration is realizable by the battery electric vehicle, regardless of the acceleration characteristic of the target virtual vehicle.

In the battery electric vehicle according to the first aspect of the present disclosure, the driving operation member may include an accelerator pedal. In the adjustment processing, the processing circuit may be configured to change a value of the coefficient based on an accelerator operation amount of the accelerator pedal and a vehicle speed of the battery electric vehicle when the acceleration characteristic of the target virtual vehicle exceeds an acceleration capability of the battery electric vehicle.

In the battery electric vehicle according to the first aspect of the present disclosure, the processing circuit may be configured to calculate a target drive force of the battery electric vehicle to set the acceleration of the battery electric vehicle to the adjusted virtual acceleration. The processing circuit may be configured to change a motor torque output by the electric motor to provide the target drive force to the battery electric vehicle.

In the battery electric vehicle according to the first aspect of the present disclosure, each of the vehicle models may have one or a plurality of parameters related to the acceleration characteristic. The processing circuit may be further configured to set the one or the plurality of parameters of the target vehicle model according to the target virtual vehicle.

According to the present disclosure, the adjusted virtual acceleration is calculated by multiplying the virtual acceleration of the target virtual vehicle by the coefficient of 1 or less according to the acceleration characteristic of the target virtual vehicle. The electric motor is controlled such that the acceleration of the battery electric vehicle is the adjusted virtual acceleration. Accordingly, even when the acceleration characteristic of the target virtual vehicle exceeds the acceleration capability of the battery electric vehicle, it is possible to realize the acceleration characteristic capable of reproducing the sense of acceleration of the target virtual vehicle within the range of the acceleration capability of the battery electric vehicle. In this manner, according to the present disclosure, it is possible to reproduce the sense of acceleration of the virtual vehicle having the acceleration characteristic that exceeds the acceleration capability of the battery electric vehicle.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram showing a configuration of a battery electric vehicle according to an embodiment;
FIG. 2 is a tree diagram showing an example of a selection input that is received by an HMI regarding a control mode of the battery electric vehicle according to an embodiment;
FIG. 3 is a diagram showing an example of a functional configuration of a control device that functions as a motor control device;
FIG. 4 is a graph showing an example of an acceleration characteristic of the battery electric vehicle realized when the control mode is an on-demand mode;
FIG. 5 is a graph showing an example of the acceleration characteristic of the battery electric vehicle that is normally realized when the acceleration characteristic of a target virtual vehicle exceeds an acceleration capability of the battery electric vehicle;
FIG. 6 is a diagram showing an example of a functional configuration of an on-demand mode drive force calculation unit shown in FIG. 3;
FIG. 7 is a graph showing an example of the acceleration characteristic of the battery electric vehicle realized by the motor control device according to an embodiment;
FIG. 8 is a flowchart showing a processing flow of processing executed by the on-demand mode drive force calculation unit;
FIG. 9 is a flowchart showing an example of processing related to setting of a coefficient;
FIG. 10 is a diagram showing an example of a configuration of a vehicle model;
FIG. 11 is a flowchart showing an example of processing related to setting of a coefficient in a first modification example;
FIG. 12 is a diagram showing an example of a coefficient setter in a second modification example; and
FIG. 13 is a diagram showing an example of a functional configuration of a control device that functions as a sound control device.

DETAILED DESCRIPTION OF EMBODIMENTS

Hereinafter, embodiments of the present disclosure will be described with reference to drawings. In each figure, the same reference numeral is assigned to the same or corresponding part and a description thereof is simplified or omitted.

1 Configuration of Power System of Battery Electric Vehicle

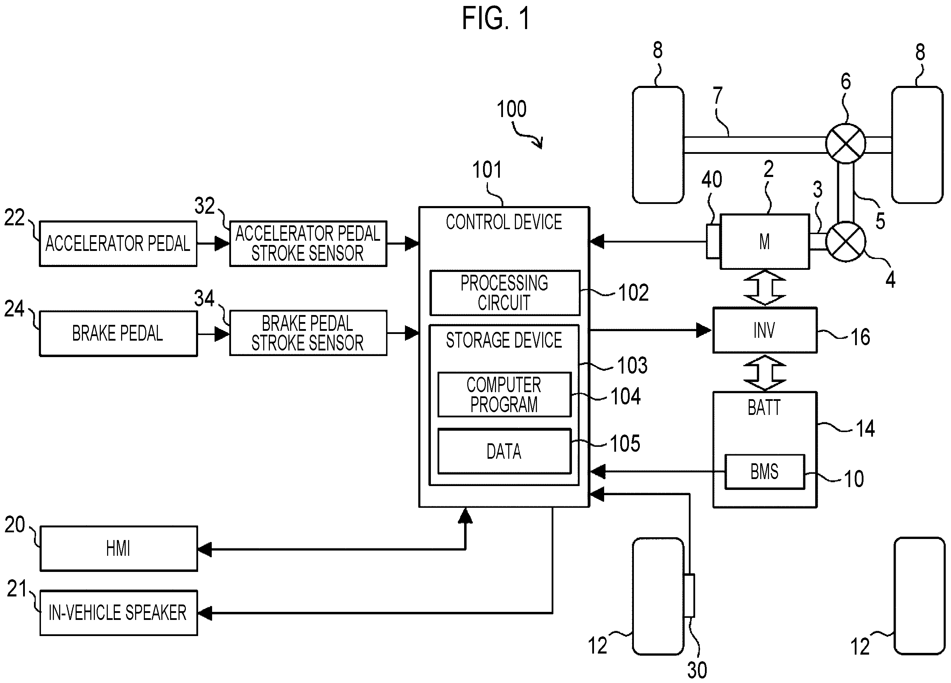

FIG. 1 is a diagram schematically showing a configuration of a battery electric vehicle 100 according to an embodiment of the present disclosure. First, a configuration of a power system of the battery electric vehicle 100 will be described with reference to FIG. 1.

The battery electric vehicle 100 includes an electric motor (M) 2 as a drive source for traveling. The electric motor 2 is, for example, a three-phase alternating current motor. An output shaft 3 of the electric motor 2 is connected to a first end of a propeller shaft 5 via a gear mechanism 4. The second end of the propeller shaft 5 is connected to a drive shaft 7 in front of a vehicle via a differential gear 6.

The battery electric vehicle 100 includes drive tire-wheel assemblies 8 as front tire-wheel assemblies and dependent tire-wheel assemblies 12 as rear tire-wheel assemblies. The drive tire-wheel assemblies 8 are provided at both ends of the drive shaft 7, respectively.

The battery electric vehicle 100 includes a battery (BATT) 14 and an inverter (INV) 16. The battery 14 stores electric energy that drives the electric motor 2. That is, the battery electric vehicle 100 is a battery electric vehicle (BEV) that travels with the electric energy stored in the battery 14. The inverter 16 is, for example, a voltage type inverter. The inverter 16 controls a motor torque output by the electric motor 2 by PWM control.

2 Configuration of Control System of Battery Electric Vehicle

Subsequently, a configuration of a control system of the battery electric vehicle 100 will be described with reference to FIG. 1.

The battery electric vehicle 100 includes a vehicle speed sensor 30 for detecting a vehicle speed. At least one tire-wheel assembly speed sensor (not shown) provided in each of right and left front tire-wheel assemblies 8 and right and left rear tire-wheel assemblies 12 is used as the vehicle speed sensor 30. The vehicle speed is one of traveling states of the battery electric vehicle 100. The battery electric vehicle 100 may further include a sensor for detecting other traveling states of the battery electric vehicle 100 such as a yaw rate, a posture, and a surrounding environment.

The battery electric vehicle 100 includes an accelerator pedal stroke sensor 32. The accelerator pedal stroke sensor 32 is provided in an accelerator pedal 22, and outputs a signal indicating an operation state of the accelerator pedal 22. The operation state of the accelerator pedal typically includes an accelerator operation amount and an accelerator operation speed. Further, the battery electric vehicle 100 includes a brake pedal stroke sensor 34. The brake pedal stroke sensor 34 is provided in a brake pedal 24, and outputs a signal indicating the operation state of the brake pedal 24. The operation state of the brake pedal 24 typically includes a brake operation amount or a brake operation speed.

Each of the accelerator pedal 22 and the brake pedal 24 is one of driving operation members used for driving of the battery electric vehicle 100. In addition, the battery electric vehicle 100 may include various types of driving operation members, such as a steering wheel for the driving related to steering.

The battery electric vehicle 100 includes a rotation speed sensor 40. The rotation speed sensor 40 is provided in the electric motor 2, and outputs a signal indicating a rotation speed of the electric motor 2.

The battery electric vehicle 100 includes a battery management system (BMS) 10. The battery management system 10 is a device that monitors a cell voltage, current, temperature, and the like of the battery 14. The battery management system 10 has a function of estimating a state of charge (SOC) of the battery 14.

The battery electric vehicle 100 includes a human machine interface (HMI) 20 as an interface with a driver and an in-vehicle speaker 21. The HMI 20 presents various types of information to the driver by display or sound, and also receives various types of inputs from the driver. The HMI 20 is configured of a display (for example, multi-information display or meter display), a switch, a touch pad, a speaker phone, a touch screen, and the like. For example, the HMI 20 displays various types of information on the display, and receives the input from the driver regarding a display content by a switch operation. Further, for example, the HMI 20 displays various types of information on a touch screen, and receives the input from the driver regarding the display content by a touch operation on the touch screen. The in-vehicle speaker 21 is a sound generator that artificially generates a sound in a vehicle cabin. In particular, the in-vehicle speaker 21 can output a pseudo engine sound described below. The in-vehicle speaker 21 may be configured as a part of the HMI 20.

The battery electric vehicle 100 includes a control device 101. Various types of sensors or control target devices mounted on the battery electric vehicle 100 are connected to the control device 101 by an in-vehicle network, such as a controller area network (CAN). In addition to the vehicle speed sensor 30, the accelerator pedal stroke sensor 32, the brake pedal stroke sensor 34, and the rotation speed sensor 40, various sensors may be mounted on the battery electric vehicle 100 and connected to the control device 101 via the in-vehicle network.

The control device 101 generates control signals related to various types of control of the battery electric vehicle 100 based on the signals acquired from the respective sensors. The control device 101 is typically an electronic control unit (ECU). The control device 101 may be a combination of a plurality of ECUs. The control device 101 includes at least a processing circuit 102 and a storage device 103.

The processing circuit 102 executes various types of processing. The processing circuit 102 is configured of, for example, a general-purpose processor, a specific-purpose processor, a central processing unit (CPU), a graphics processing unit (GPU), an application specific integrated circuit (ASIC), a field-programmable gate array (FPGA), an integrated circuit, a conventional circuit, and a combination of one or a plurality of these. A processor including a transistor and other circuits is an example of the processing circuit 102. The processing circuit 102 may also be referred to as circuitry or processing circuitry. The circuitry is hardware programmed to realize the function described in the present disclosure, or hardware that executes the function.

The storage device 103 stores various types of information needed to execute the processing of the processing circuit 102. The storage device 103 is configured of a recording medium, such as a random access memory (RAM), a read only memory (ROM), a solid state drive (SSD), or a hard disk drive (HDD). The storage device 103 stores a computer program 104 that can be executed by the processing circuit 102 and various types of data 105. The computer program 104 is configured of a plurality of instructions that describes the processing to be executed by the processing circuit 102. The computer program 104 may be recorded on a computer-readable recording medium. The processing circuit 102 that executes the computer program 104 and the storage device 103 cooperate with each other to realize the function of the control device 101.

The control device 101 according to the present embodiment has, regarding control of the battery electric vehicle 100, at least two control modes of a normal mode and an on-demand mode. The control of the battery electric vehicle 100, which is executed by the control device 101, is changed according to a selected control mode. Hereinafter, the control mode of the battery electric vehicle 100 will be described.

3 Control Mode of Battery Electric Vehicle

As described above, there are at least two modes of the normal mode and the on-demand mode in the control mode of the battery electric vehicle 100. The normal mode is a control mode in which the battery electric vehicle 100 is driven as a normal BEV. When the normal mode is selected, the control device 101 performs the control of the battery electric vehicle 100 to operate as the normal BEV. On the other hand, the on-demand mode is a control mode in which a sense of acceleration of a virtual vehicle (hereinafter referred to as "target virtual vehicle") selected by the driver from among a plurality of virtual vehicles is reproduced in the battery electric vehicle 100. When the on-demand mode is selected, the control device 101 performs the control of the battery electric vehicle 100 such that the driver can obtain the sense of acceleration as if the driver drives the target virtual vehicle. Details of various types of control of the battery electric vehicle 100 in each of the normal mode and the on-demand mode will be described below.

In the on-demand mode, the virtual vehicles include various vehicles having different acceleration characteristics in response to a driving operation of the driver. Each virtual vehicle may be assumed to be a real vehicle, or may be assumed to be a vehicle that is not present in reality. The difference in the acceleration characteristic is generally due to a difference in a configuration of a powertrain from the drive source to the drive tire-wheel assemblies or a difference in a control method of the powertrain. Therefore, the virtual vehicles may be considered to include various vehicles in which at least some elements of the configuration or the control method related to the powertrain are different.

The driver operates the HMI 20 to select the control mode. The HMI 20 is configured to receive a selection input of the control mode from the driver. Further, the HMI 20 is configured to receive the selection input of the target virtual vehicle from the driver in the on-demand mode.

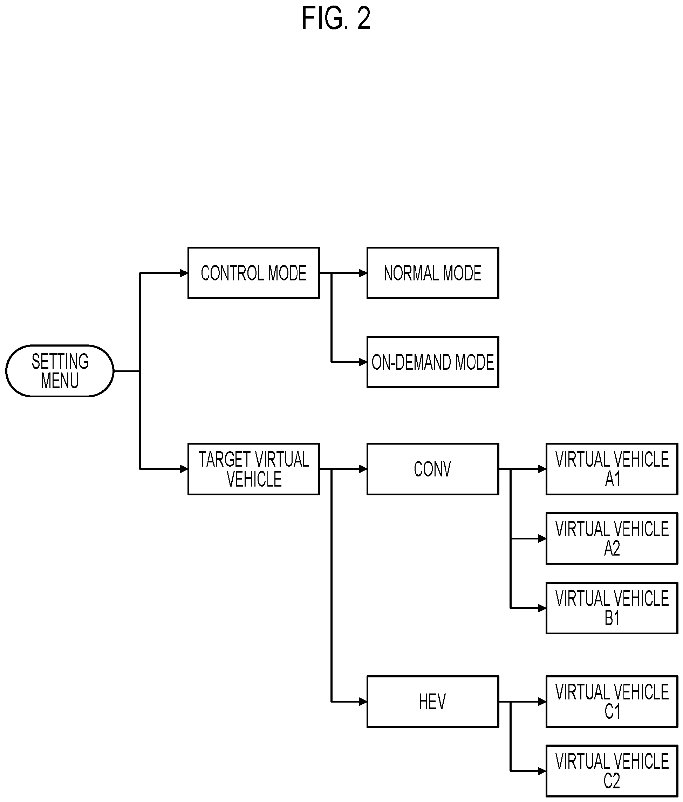

FIG. 2 is a tree diagram showing an example of the selection input received by the HMI 20. For example, the HMI 20 receives the selection input from the driver as follows in accordance with the tree shown in FIG. 2, via the display on the display or the touch screen.

First, the HMI 20 displays a setting menu screen on the display or the touch screen in response to the operation of the driver. An initial screen of the setting menu screen displays an option "control mode" and an option "target virtual vehicle". The option "control mode" is to receive the selection input of the control mode from the driver. The option "target virtual vehicle" is to receive the selection input of the target virtual vehicle from the driver.

When the option "control mode" is selected, next, the setting menu screen displays the option "normal mode" and the option "on-demand mode". When the option "normal mode" is selected, the HMI 20 determines that the control mode of the battery electric vehicle 100 is the normal mode. When the option "on-demand mode" is selected, the HMI 20 determines that the control mode of the battery electric vehicle 100 is the on-demand mode. In this manner, the HMI 20 receives the selection input of the control mode from the driver.

On the other hand, when the option "on-demand mode" is selected, next, the setting menu screen displays an option "CONV" and an option "HEV". The option "CONV" and the option "HEV" respectively indicate classifications of the virtual vehicles that are selectable in the on-demand mode. The CONV is a classification indicating a conventional vehicle. The HEV is a classification indicating a hybrid electric vehicle. When the option "CONV" is selected, next, the setting menu screen displays an option "virtual vehicle A1", an option "virtual vehicle A2", and an option "virtual vehicle B1". The virtual vehicle A1, the virtual vehicle A2, and the virtual vehicle B1 are the virtual vehicles classified into the CONV among the selectable virtual vehicles. Similarly, when the option "HEV" is selected, next, the setting menu screen displays an option "virtual vehicle C1" and an option "virtual vehicle C2". The virtual vehicle C1 and the virtual vehicle C2 are the virtual vehicles classified into the HEV among the selectable virtual vehicles. When any one of these options is selected, the HMI 20 determines that a corresponding virtual vehicle is the target virtual vehicle. For example, when the option "virtual vehicle A2" is selected, the HMI 20 determines that the virtual vehicle A2 is the target virtual vehicle. In this manner, the HMI 20 receives the selection input of the target virtual vehicle from the driver.

The classification of the virtual vehicles in the above description is an example, and the option related to the classification may be changed as appropriate. For example, the option related to the classification may further include an option indicating a plug-in hybrid electric vehicle or a fuel cell electric vehicle. Further, for example, the option related to the classification may indicate another classification such as a classification related to a type of an internal combustion engine to be mounted (for example, in-line four-cylinder turbocharged engine, flat six-cylinder engine, or a V12 engine). Alternatively, when the option "on-demand mode" is selected, the option related to the classification may not be displayed, and the option related to the virtual vehicle may be displayed.

For each option, the name displayed on the setting menu screen may be set as appropriate in consideration of the ease of understanding of the driver. For example, in the option related to the virtual vehicle, the displayed name may be a more specific name, such as a vehicle model or a product name, which allows the driver to easily imagine the virtual vehicle.

As described above, the driver can select the control mode by operating the HMI 20. The control device 101 performs the control of the battery electric vehicle 100 in accordance with the selected control mode.

The control device 101 according to the present embodiment functions as at least a motor control device that controls the electric motor 2 in response to the driving operation of the driver in the control of the battery electric vehicle 100. Specifically, with the execution of the computer program 104 for electric motor control, which is stored in the storage device 103, by the processing circuit 102, the control device 101 functions as the motor control device. The electric motor 2 is the drive source of the battery electric vehicle 100. Therefore, the motor control device may also be referred to as a device that performs drive control of the battery electric vehicle 100. In the following, the control of the battery electric vehicle 100 by the motor control device will be described.

4 Motor Control Device

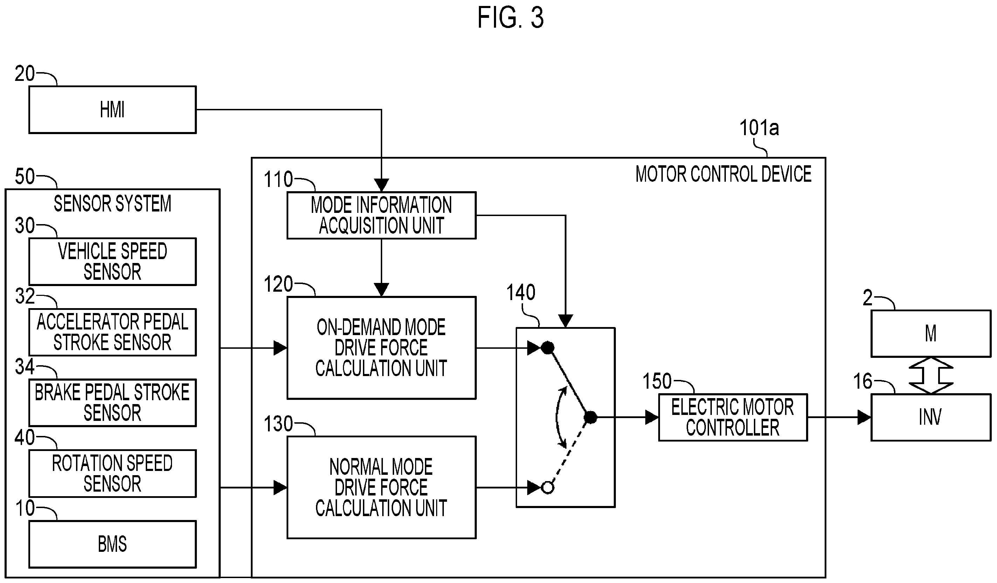

FIG. 3 is a diagram showing an example of a functional configuration of a motor control device 101a. The motor control device 101a calculates a target drive force of the battery electric vehicle 100 in response to the driving operation of the driver. The motor control device 101a controls the electric motor 2 via the inverter 16 to provide the calculated target drive force to the battery electric vehicle 100.

The motor control device 101a receives the signals from the HMI 20 and a sensor system 50. The sensor system 50 includes the vehicle speed sensor 30, the accelerator pedal stroke sensor 32, the brake pedal stroke sensor 34, the rotation speed sensor 40, and the battery management system 10. The sensor system 50 may include other sensors (not shown). For example, the sensor system 50 may include a rudder angle sensor that detects a steering angle of the steering wheel, a yaw rate sensor that detects the yaw rate of the battery electric vehicle 100, an inertial measurement unit (IMU) that detects the posture of the battery electric vehicle 100, and a sensor (for example, camera, radar, or LiDAR) that detects the surrounding environment of the battery electric vehicle 100.

The signal input to the motor control device 101a from the HMI 20 includes a signal indicating the control mode selected by the driver and a signal indicating the target virtual vehicle selected by the driver. The signal input to the motor control device 101a from the sensor system 50 includes a signal indicating the vehicle speed of the battery electric vehicle 100, a signal indicating the operation state of the accelerator pedal 22, a signal indicating the operation state of the brake pedal 24, a signal indicating the rotation speed of the electric motor 2, and a signal indicating a state of the battery 14 (for example, cell voltage, current, temperature, and SOC).

The motor control device 101a includes, as functional blocks, a mode information acquisition unit 110, an on-demand mode drive force calculation unit 120, a normal mode drive force calculation unit 130, a target drive force switching unit 140, and an electric motor controller 150. The processing circuit 102 that executes the computer program 104 and the storage device 103 cooperate with each other to realize these functional blocks.

The mode information acquisition unit 110 receives the signal from the HMI 20 and acquires information regarding which one of the normal mode and the on-demand mode is selected. Further, the mode information acquisition unit 110 acquires information of the target virtual vehicle selected by the driver. The mode information acquisition unit 110 transmits the information of the selected control mode to the target drive force switching unit 140. Further, the mode information acquisition unit 110 transmits the information of the selected target virtual vehicle to the on-demand mode drive force calculation unit 120.

The on-demand mode drive force calculation unit 120 acquires the information of the target virtual vehicle selected by the driver from the mode information acquisition unit 110. The on-demand mode drive force calculation unit 120 calculates the target drive force as the on-demand mode, based on the signal from the sensor system 50. That is, the on-demand mode drive force calculation unit 120 calculates the target drive force to reproduce the sense of acceleration of the target virtual vehicle in response to the driving operation of the driver in the battery electric vehicle 100. Details of the processing executed by the on-demand mode drive force calculation unit 120 will be described below.

The normal mode drive force calculation unit 130 calculates the target drive force as the normal mode, based on the signal from the sensor system 50. That is, the normal mode drive force calculation unit 130 calculates the target drive force to cause the battery electric vehicle 100 to operate as the normal BEV. For example, the normal mode drive force calculation unit 130 calculates the target drive force by using a map with the accelerator operation amount of the accelerator pedal 22 and the rotation speed of the electric motor 2 as parameters. Further, the normal mode drive force calculation unit 130 may be configured to calculate the target drive force with the brake operation amount of the brake pedal 24 or the SOC of the battery 14 as a parameter. However, in the present embodiment, the processing executed by the normal mode drive force calculation unit 130 is not particularly limited. Other suitable known techniques may be employed for the processing executed by the normal mode drive force calculation unit 130.

The target drive force switching unit 140 switches the target drive force of the battery electric vehicle 100 used for the control of the electric motor 2 according to the selected control mode. The target drive force switching unit 140 acquires the information of the control mode selected from the mode information acquisition unit 110. When the on-demand mode is selected, the target drive force switching unit 140 transmits the target drive force calculated by the on-demand mode drive force calculation unit 120 to the electric motor controller 150 as the target drive force of the battery electric vehicle 100. On the other hand, when the normal mode is selected, the target drive force switching unit 140 transmits the target drive force calculated by the normal mode drive force calculation unit 130 to the electric motor controller 150 as the target drive force of the battery electric vehicle 100.

When the on-demand mode is selected, the normal mode drive force calculation unit 130 may be configured not to execute the processing. Similarly, when the normal mode is selected, the on-demand mode drive force calculation unit 120 may be configured not to execute the processing.

The electric motor controller 150 receives the target drive force of the battery electric vehicle 100 via the target drive force switching unit 140. That is, when the on-demand mode is selected, the electric motor controller 150 receives the target drive force calculated by the on-demand mode drive force calculation unit 120. On the other hand, when the normal mode is selected, the electric motor controller 150 receives the target drive force calculated by the normal mode drive force calculation unit 130. The electric motor controller 150 changes the motor torque output by the electric motor 2 such that the input target drive force is provided to the battery electric vehicle 100. More specifically, the electric motor controller 150 generates the control signal for the inverter 16 according to the input target drive force. The electric motor controller 150 changes the motor torque output by the electric motor 2 via the PWM control by the inverter 16.

In this manner, the motor control device 101a controls the electric motor 2 to provide the target drive force according to the control mode to the battery electric vehicle 100. Therefore, with the motor control device 101a, the acceleration characteristic of the battery electric vehicle 100 when the on-demand mode is selected is an acceleration characteristic simulated based on the acceleration characteristic of the target virtual vehicle selected by the driver. On the other hand, the acceleration characteristic of the battery electric vehicle 100 when the normal mode is selected is the acceleration characteristic of the normal BEV.

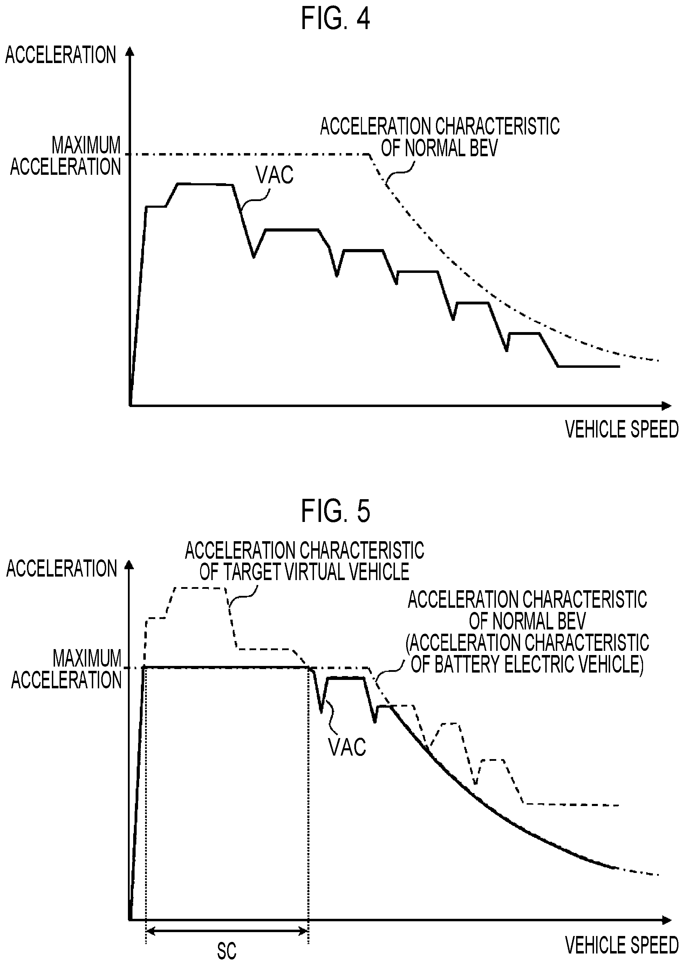

FIG. 4 is a graph showing an example of an acceleration characteristic VAC of the battery electric vehicle 100 when the on-demand mode is selected. FIG. 4 also shows the acceleration characteristic (one-dot chain line) of the normal BEV for comparison. The acceleration characteristic VAC of the battery electric vehicle 100 when the on-demand mode is selected changes, with a change in the target virtual vehicle, to various patterns according to the target virtual vehicle. This is because the calculated target drive force in the on-demand mode is changed by the target virtual vehicle selected by the driver. As a result, in the on-demand mode, it is possible for the driver to enjoy the sense of acceleration of the various virtual vehicles in the battery electric vehicle 100.

Hereinafter, details of the calculation of the target drive force in the on-demand mode, that is, the processing executed by the on-demand mode drive force calculation unit 120 will be described.

4.1 Calculation of Target Drive Force in On-Demand Mode

The on-demand mode drive force calculation unit 120 calculates the target drive force such that the sense of acceleration of the target virtual vehicle in response to the driving operation of the driver is reproduced in the battery electric vehicle 100. In particular, the on-demand mode drive force calculation unit 120 adopts a method (hereinafter referred to as "virtual acceleration-based method") in which a virtual acceleration when the target virtual vehicle is driven is calculated (simulated) by using a vehicle model of the target virtual vehicle (hereinafter referred to as "target vehicle model") and the target drive force is calculated such that an acceleration of the battery electric vehicle 100 is the virtual acceleration.

By the way, the acceleration that can be realized by the battery electric vehicle 100, that is, an acceleration capability of the battery electric vehicle 100 is naturally limited in relation to an output characteristic of the motor torque of the electric motor 2. In particular, the acceleration capability of the battery electric vehicle 100 is equivalent to the acceleration characteristic of the normal BEV. That is, the acceleration characteristic that can be realized by the battery electric vehicle 100 is within a range of the acceleration characteristic of the normal BEV.

For this reason, in the virtual acceleration-based method, when the acceleration characteristic of the target virtual vehicle exceeds the acceleration capability of the battery electric vehicle 100, a situation occurs in which the acceleration characteristic of the target virtual vehicle cannot be realized as it is in the battery electric vehicle 100. FIG. 5 is a graph showing an example of the acceleration characteristic VAC of the battery electric vehicle 100 that is normally realized when the acceleration characteristic of the target virtual vehicle exceeds the acceleration capability of the battery electric vehicle 100. In the example shown in FIG. 5, in the acceleration characteristic VAC of the battery electric vehicle 100, the acceleration characteristic (broken line) of the target virtual vehicle cannot be realized as it is due to the limit by the acceleration capability (one-dot chain line) of the battery electric vehicle 100. In such an acceleration characteristic VAC of the battery electric vehicle 100, the sense of acceleration of the target virtual vehicle may not be reproduced when the driver depresses the accelerator pedal 22 to accelerate the battery electric vehicle 100, or the like.

In the example shown in FIG. 5, one factor that the acceleration characteristic of the target virtual vehicle is not sufficiently realized in the acceleration characteristic VAC is a shape of an acceleration fluctuation in a section in which the acceleration capability of the battery electric vehicle 100 is exceeded. For example, during a section SC, the acceleration characteristic of the target virtual vehicle has a large fluctuation shape in the acceleration, while the acceleration in the acceleration characteristic VAC is constant at a realizable maximum acceleration of the battery electric vehicle 100. Further, a second factor that the acceleration characteristic of the target virtual vehicle is not sufficiently realized in the acceleration characteristic VAC is a magnitude of the acceleration in the section in which the acceleration capability of the battery electric vehicle 100 is exceeded. For example, during the section SC, there is a difference between the acceleration in the acceleration characteristic of the target virtual vehicle and the acceleration in the acceleration characteristic VAC.

Among the two factors, the difference in the shape of the acceleration fluctuation has a significant influence on the sense of acceleration provided to the driver. On the other hand, when the difference in the shape of the acceleration fluctuation is small, the influence on the sense of acceleration provided to the driver is small even though there is a difference in the magnitude of the acceleration.

Based on the above viewpoint, the on-demand mode drive force calculation unit 120 according to the present embodiment is configured to realize the acceleration characteristic VAC of the battery electric vehicle 100 capable of reproducing the sense of acceleration of the target virtual vehicle, even when the acceleration characteristic of the target virtual vehicle exceeds the acceleration capability of the battery electric vehicle 100. That is, the on-demand mode drive force calculation unit 120 is configured to realize the acceleration characteristic VAC of the battery electric vehicle 100 having the shape of the acceleration fluctuation in the acceleration characteristic of the target virtual vehicle within the range of the acceleration capability of the battery electric vehicle 100. More specifically, the on-demand mode drive force calculation unit 120 is configured to further execute processing of multiplying the virtual acceleration by a coefficient of 1 or less according to the acceleration characteristic of the target virtual vehicle, in the virtual acceleration-based method. With this processing, the virtual acceleration is adjusted not to exceed the acceleration capability of the battery electric vehicle 100. Further, since this processing is a coefficient multiplication, the shape of the acceleration fluctuation is maintained. The on-demand mode drive force calculation unit 120 calculates the target drive force in which the acceleration of the battery electric vehicle 100 is adjusted to the virtual acceleration.

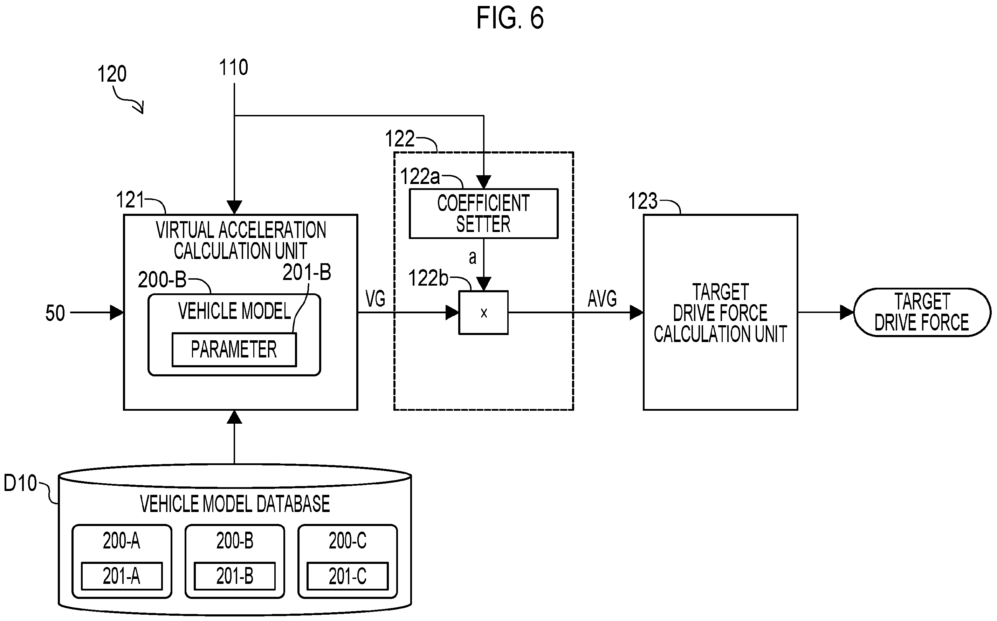

FIG. 6 is a diagram showing an example of a functional configuration of the on-demand mode drive force calculation unit 120. The on-demand mode drive force calculation unit 120 includes, as functional blocks, a virtual acceleration calculation unit 121, an adjustment unit 122, and a target drive force calculation unit 123. Further, the on-demand mode drive force calculation unit 120 is configured to access a vehicle model database D10.

The vehicle model database D10 manages a plurality of vehicle models 200 obtained by modeling the virtual vehicles. The vehicle model database D10 may be realized as the data 105 stored in the storage device 103. Further, a new vehicle model 200 may be downloaded in the vehicle model database D10 at any time. In the example shown in FIG. 6, the vehicle model database D10 manages three vehicle models 200-A, 200-B, and 200-C. In each vehicle model 200, the operation of the virtual vehicle in response to the driving operation of the driver is simulated with the operation state of the driving operation member and the traveling state of the battery electric vehicle 100 as inputs. Each vehicle model 200 is configured to simulate at least a drive force provided to the virtual vehicle in response to the driving operation, particularly the operation of the accelerator pedal 22, and an acceleration and deceleration operation of the virtual vehicle due to action of the drive force. A simulation result of the acceleration and deceleration operation of the virtual vehicle in each vehicle model 200 includes the virtual acceleration of the virtual vehicle. That is, each vehicle model 200 is configured to calculate the virtual acceleration of the virtual vehicle in response to the driving operation of the driver.

Typically, each vehicle model 200 is configured of a control model that simulates a control system related to the powertrain of the virtual vehicle and a plant model that simulates the acceleration and deceleration operation of the virtual vehicle in response to a control signal from the control model. In this case, the plant model includes a model of the powertrain that operates based on the control signal from the control model and a model for simulating the operation of the virtual vehicle due to the action of the virtual drive force output from the powertrain model. An example of a configuration of the vehicle model 200 will be described below.

Further, each vehicle model 200 has a parameter 201 related to the operation of the virtual vehicle in the simulation. Examples of the parameter 201 include a vehicle weight, a tire diameter, each gear ratio, a maximum engine torque, engine torque responsiveness, and a transmission timing. A content of the parameter 201 may be different for each vehicle model 200. The vehicle model 200 expresses a model of one virtual vehicle by a combination with a set value of the parameter 201 thereof. For example, each virtual vehicle corresponds to a combination of the vehicle model 200 and the set value of the parameter 201, as shown in a table below. As shown in the table below, the same vehicle model 200 may correspond to different virtual vehicles. This is a case where types of powertrain systems thereof are the same as each other and the respective virtual vehicles can be expressed by changes in the set value of the parameter 201, or the like.

Table 1

| Virtual vehicle | Vehicle model | Parameter |
|---|---|---|
| Virtual vehicle A1 | 200-A | Set value A1 |
| Virtual vehicle A2 | 200-A | Set value A2 |
| Virtual vehicle B 1 | 200-B | Set value B1 |
| Virtual vehicle C1 | 200-C | Set value C1 |
| Virtual vehicle C2 | 200-C | Set value C2 |

The virtual acceleration calculation unit 121 acquires the information of the target virtual vehicle from the mode information acquisition unit 110. The virtual acceleration calculation unit 121 reads out the vehicle model 200 (target vehicle model) corresponding to the target virtual vehicle from the acquired information with reference to the vehicle model database D10. The example shown in FIG. 6 shows a case where the virtual acceleration calculation unit 121 reads out the vehicle model 200-B. Further, the virtual acceleration calculation unit 121 sets the parameter 201 of the readout vehicle model 200 according to the target virtual vehicle. For example, when the target virtual vehicle is the "virtual vehicle B1" in the above table, the virtual acceleration calculation unit 121 sets a parameter 201-B of the vehicle model 200-B to a set value B1.

The virtual acceleration calculation unit 121 uses the readout target vehicle model to calculate a virtual acceleration VG of the target virtual vehicle in response to the operation of the driving operation member of the battery electric vehicle 100. More specifically, the virtual acceleration calculation unit 121 receives the signal from the sensor system 50, and acquires information of the operation state of the driving operation member and information of the traveling state of the battery electric vehicle 100 for use as inputs to the target vehicle model. For example, the virtual acceleration calculation unit 121 acquires the accelerator operation amount of the accelerator pedal 22 and the vehicle speed of the battery electric vehicle 100. In addition, the virtual acceleration calculation unit 121 may acquire information such as the accelerator operation speed of the accelerator pedal 22, the brake operation amount and the brake operation speed of the brake pedal 24, the steering angle of the steering wheel, and the yaw rate of the battery electric vehicle 100, according to the configuration of the target vehicle model. The virtual acceleration calculation unit 121 inputs the acquired information to the target vehicle model. The virtual acceleration calculation unit 121 simulates the acceleration and deceleration operation of the target virtual vehicle using the target vehicle model to calculate the virtual acceleration VG of the target virtual vehicle. The virtual acceleration VG calculated by the virtual acceleration calculation unit 121 is transmitted to the adjustment unit 122.

The adjustment unit 122 executes processing (adjustment processing) of calculating an adjusted virtual acceleration AVG by multiplying the virtual acceleration VG by a coefficient a of 1 or less according to the acceleration characteristic of the target virtual vehicle. The adjustment unit 122 includes a coefficient setter 122a and a multiplier 122b. The coefficient setter 122a sets the coefficient a according to the acceleration characteristic of the target virtual vehicle. The multiplier 122b multiplies the virtual acceleration VG by the coefficient a set by the coefficient setter 122a. A multiplication result by the multiplier 122b is the adjusted virtual acceleration AVG. That is, $AVG = a \cdot VG$. The adjusted virtual acceleration AVG calculated by the adjustment unit 122 is transmitted to the target drive force calculation unit 123.

The setting of the coefficient a by the coefficient setter 122a is performed based on whether or not the acceleration characteristic of the target virtual vehicle exceeds the acceleration capability of the battery electric vehicle 100. Thus, the coefficient setter 122a manages the acceleration characteristic of each of the virtual vehicles that can be selected in the on-demand mode. The coefficient setter 122a acquires the information of the target virtual vehicle from the mode information acquisition unit 110, and refers to the acceleration characteristic of the target virtual vehicle. Further, the coefficient setter 122a manages the acceleration characteristic (acceleration capability of the battery electric vehicle 100) of the battery electric vehicle 100 as the normal BEV.

When the acceleration characteristic of the target virtual vehicle does not exceed the acceleration capability of the battery electric vehicle 100, the coefficient setter 122a sets the coefficient a to 1. That is, in the multiplier 122b, the virtual acceleration VG is the adjusted virtual acceleration AVG as it is.

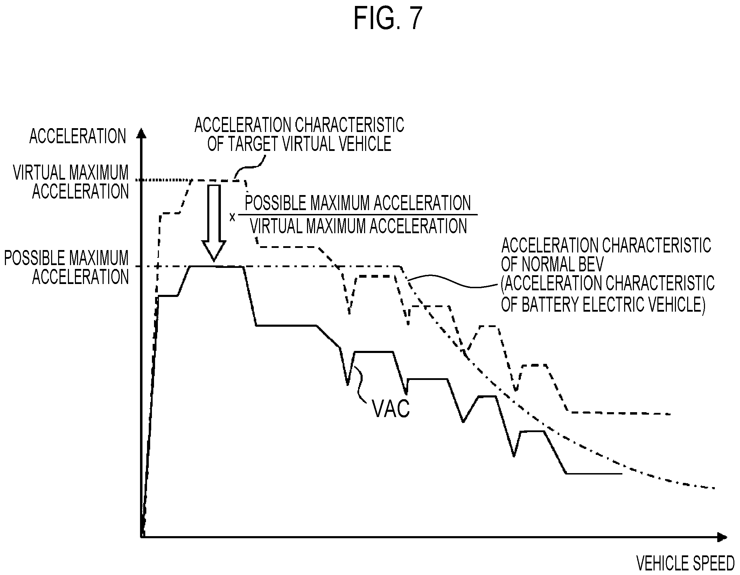

On the other hand, when the acceleration characteristic of the target virtual vehicle exceeds the acceleration capability of the battery electric vehicle 100, the coefficient setter 122a sets the coefficient a to a value at which the adjusted virtual acceleration AVG is within the range of the acceleration capability of the battery electric vehicle 100. As a more specific example, the coefficient setter 122a can set the coefficient a to a value obtained by dividing the realizable maximum acceleration of the battery electric vehicle 100 (hereinafter referred to as "possible maximum acceleration") by the maximum acceleration in the acceleration characteristic of the target virtual vehicle (hereinafter referred to as "virtual maximum acceleration"). That is, the coefficient setter 122a performs setting of coefficient a = possible maximum acceleration/virtual maximum acceleration. FIG. 7 shows an example of the acceleration characteristic VAC of the battery electric vehicle 100 realized when coefficient a = possible maximum acceleration/virtual maximum acceleration. As shown in FIG. 7, with the multiplication of the coefficient a set as described above, it is possible to realize the acceleration characteristic VAC of the battery electric vehicle 100 having the shape of the acceleration fluctuation in the acceleration characteristic of the target virtual vehicle. The coefficient setter 122a may be configured to set the coefficient a to a value smaller than possible maximum acceleration/virtual maximum acceleration.

Referring to FIG. 6 again. The target drive force calculation unit 123 acquires the adjusted virtual acceleration AVG from the adjustment unit 122, and calculates the target drive force for setting the acceleration of the battery electric vehicle 100 to the adjusted virtual acceleration AVG. For example, the target drive force calculation unit 123 converts the adjusted virtual acceleration AVG into a target drive force $F_{veh}$ by using a simple inverse model of the battery electric vehicle 100, as indicated by the following equation. In the following equation, m is the vehicle weight of the battery electric vehicle 100, and $F_{load}$ is actual traveling resistance applied to the battery electric vehicle 100. The on-demand mode drive force calculation unit 120 outputs the target drive force calculated by the target drive force calculation unit 123.

$$F_{veh} = m * AVG - F_{load}$$

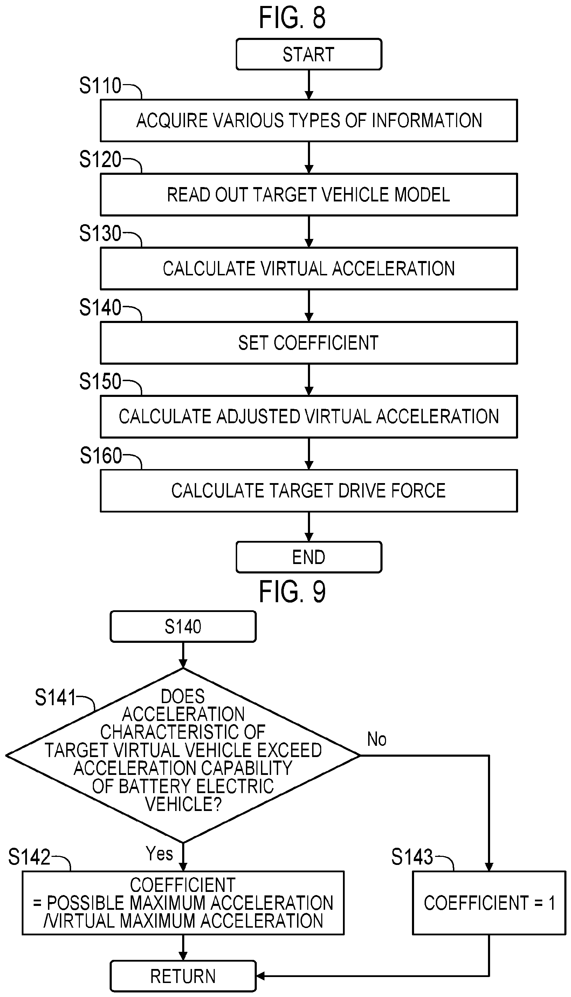

As described above, it is possible to provide the functional configuration of the on-demand mode drive force calculation unit 120 according to the present embodiment. FIG. 8 is a flowchart showing a processing flow of the processing executed by the on-demand mode drive force calculation unit 120 based on the functional configuration described above. The processing flow shown in FIG. 8 is repeatedly executed in a predetermined processing cycle.

In step S 110, the on-demand mode drive force calculation unit 120 acquires various types of information. For example, the on-demand mode drive force calculation unit 120 acquires the information of the target virtual vehicle from the mode information acquisition unit 110. Further, the on-demand mode drive force calculation unit 120 acquires, from the sensor system 50, the information of the operation state of the driving operation member and the information of the traveling state of the battery electric vehicle 100.

Next, in step S120, the on-demand mode drive force calculation unit 120 reads out the vehicle model 200 (target vehicle model) corresponding to the target virtual vehicle with reference to the vehicle model database D10.

Next, in step S130, the on-demand mode drive force calculation unit 120 calculates the virtual acceleration VG of the target virtual vehicle in response to the operation of the driving operation member by using the target vehicle model.

Next, in step S140, the on-demand mode drive force calculation unit 120 sets the coefficient a of 1 or less for the adjustment processing, according to the acceleration characteristic of the target virtual vehicle. FIG. 9 is a flowchart showing an example of processing related to step S140. Each piece of processing shown in FIG. 9 is executed by the coefficient setter 122a of the adjustment unit 122. In the example shown in FIG. 9, first, the coefficient setter 122a determines in step S 140 whether or not the acceleration characteristic of the target virtual vehicle exceeds the acceleration capability of the battery electric vehicle 100 (step S141). When the acceleration characteristic of the target virtual vehicle exceeds the acceleration capability of the battery electric vehicle 100 (Yes in step S141), the coefficient setter 122a sets the coefficient a to possible maximum acceleration/virtual maximum acceleration (step S142). On the other hand, when the acceleration characteristic of the target virtual vehicle does not exceed the acceleration capability of the battery electric vehicle 100 (No in step S141), the coefficient setter 122a sets the coefficient a to 1 (step S143).

Referring to FIG. 8 again. After step S140, next, in step S150 (adjustment processing), the on-demand mode drive force calculation unit 120 calculates the adjusted virtual acceleration AVG by multiplying the virtual acceleration VG by the coefficient a.

Next, in step S160, the on-demand mode drive force calculation unit 120 calculates the target drive force for setting the acceleration of the battery electric vehicle 100 to the adjusted virtual acceleration AVG. Thereafter, this processing ends.

As described above, with the on-demand mode drive force calculation unit 120 according to the present embodiment, the adjusted virtual acceleration AVG is calculated by multiplying the virtual acceleration VG by the coefficient of 1 or less according to the acceleration characteristic of the target virtual vehicle. The target drive force for setting the acceleration of the battery electric vehicle 100 to the adjusted virtual acceleration AVG is calculated. Accordingly, as shown in FIG. 7, even when the acceleration characteristic of the target virtual vehicle exceeds the acceleration capability of the battery electric vehicle 100, it is possible to realize the acceleration characteristic VAC of the battery electric vehicle 100 capable of reproducing the sense of acceleration of the target virtual vehicle within the range of the acceleration capability of the battery electric vehicle 100. In this manner, according to the present embodiment, it is possible to reproduce the sense of acceleration of the virtual vehicle that exceeds the acceleration capability of the battery electric vehicle 100 in the battery electric vehicle 100. As a result, it is possible for the driver to enjoy the sense of acceleration of the virtual vehicle that exceeds the acceleration capability of the battery electric vehicle 100. Further, it is possible to increase the variation of the virtual vehicle capable of reproducing the sense of acceleration in the on-demand mode and to improve the satisfaction of the user.

4.1.2 Configuration Example of Vehicle Model

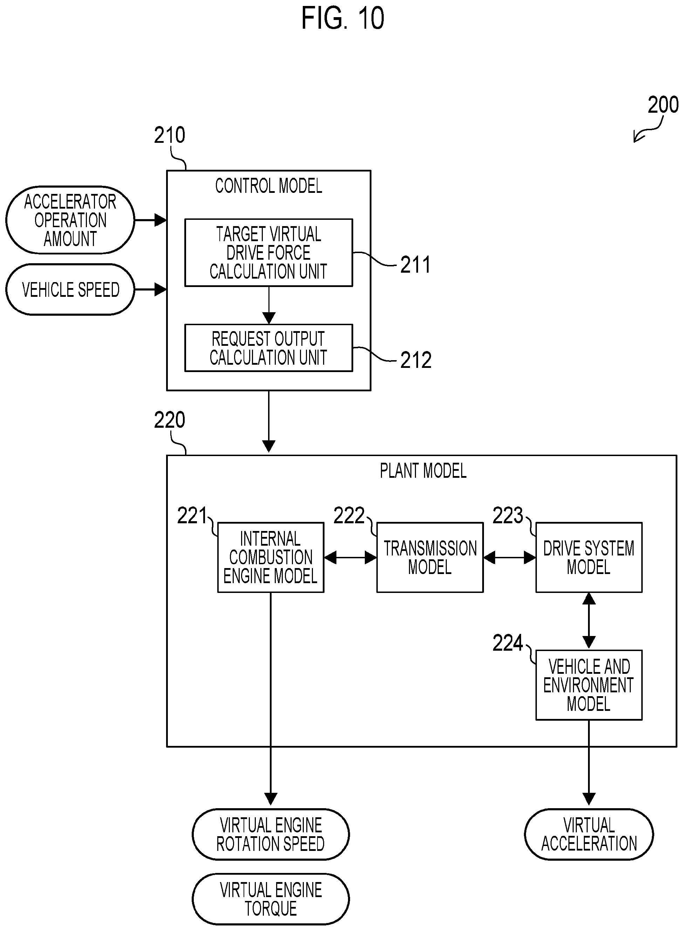

An example of the configuration of the vehicle model 200 managed by the vehicle model database D10 will be described. FIG. 10 is a diagram showing an example of the configuration of the vehicle model 200. The vehicle model 200 includes a control model 210 and a plant model 220. The control model 210 simulates the control system related to the powertrain of the virtual vehicle. The plant model 220 simulates the acceleration and deceleration operation of the virtual vehicle in response to the control signal from the control model 210. The plant model 220 includes a model of the powertrain that operates based on the control signal from the control model 210 and a model for simulating the operation of the virtual vehicle due to the action of the virtual drive force output from the powertrain model. The control model 210 may also simulate the control system that calculates a request output for the powertrain of the virtual vehicle. Further, the plant model 220 may also simulate a physical constraint on the request output for the powertrain.

Each specification of the control model 210 and the plant model 220 is different for each type of the powertrain system. For example, configurations of the control system, a transmission, and a drive system are different between the CONV and the HEV. Thus, in each of the vehicle model 200 of the CONV and the vehicle model 200 of the HEV, both the control model 210 and the plant model 220 have different specifications. The example shown in FIG. 10 particularly shows a case where the virtual vehicle is an automatic transmission vehicle (AT vehicle) including the internal combustion engine.

The control model 210 includes a target virtual drive force calculation unit 211 and a request output calculation unit 212. The target virtual drive force calculation unit 211 calculates the virtual drive force (target virtual drive force) requested by an output of the powertrain of the virtual vehicle, based on the accelerator operation amount and the vehicle speed. For example, the target virtual drive force calculation unit 211 performs the calculation using a map in which the target virtual drive force is provided for a combination of the accelerator operation amount and the vehicle speed. The request output calculation unit 212 calculates the request output for the powertrain such that the calculated target virtual drive force can be satisfied. The calculated request output includes a target engine torque of the internal combustion engine or a target gear stage of the transmission. The control model 210 transmits the calculated request output to the plant model 220.

The plant model 220 includes an internal combustion engine model 221, a transmission model 222, a drive system model 223, and a vehicle and environment model 224. The internal combustion engine model 221, the transmission model 222, and the drive system model 223 are models of the powertrain from the drive source to the drive tire-wheel assemblies. The vehicle and environment model 224 is to simulate the operation of the virtual vehicle due to the action of the virtual drive force output by the powertrain model.

The internal combustion engine model 221 is for the internal combustion engine of the virtual vehicle. The internal combustion engine model 221 simulates, for example, the operation of the internal combustion engine in response to an input of the target engine torque. The internal combustion engine model 221 outputs a virtual engine rotation speed and a virtual engine torque. The parameter 201 that may be changed according to the target virtual vehicle in the internal combustion engine model 221 is, for example, the maximum engine torque and the engine torque responsiveness.

The transmission model 222 is for the transmission of the virtual vehicle. The transmission model 222 simulates, for example, the operation of the transmission in response to an input of the target gear stage. The transmission model 222 outputs a virtual transmission output torque from the virtual engine torque output by the internal combustion engine model 221 and the gear ratio decided by a virtual gear stage. The transmission model 222 includes a stepped transmission model simulated based on a stepped transmission and a continuously variable transmission model simulated based on a continuously variable transmission. Any one of the stepped transmission model and the continuously variable transmission model is selected according to the target virtual vehicle. The parameter 201 that may be changed according to the target virtual vehicle in the transmission model 222 is, for example, each gear ratio and the transmission timing. In a case of the stepped transmission model, the gear ratio means a gear ratio of each gear stage.

The drive system model 223 is for the drive system of the virtual vehicle. In the drive system model 223 model, for example, a mechanical structure from the transmission to the drive tire-wheel assemblies is modeled. The drive system model 223 calculates a drive tire-wheel assembly torque by using the virtual transmission output torque output by the transmission model 222 and a predetermined deceleration ratio, and outputs the virtual drive force of the virtual vehicle. The parameter 201 that may be changed according to the target virtual vehicle in the drive system model 223 is, for example, a deceleration ratio and a maximum allowable torque of a propeller shaft.

The vehicle and environment model 224 represents a dynamic characteristic of the virtual vehicle and a traveling environment of the virtual vehicle. The vehicle and environment model 224 calculates the traveling resistance applied to the virtual vehicle from the traveling environment of the virtual vehicle. The vehicle and environment model 224 simulates the acceleration and deceleration operation of the virtual vehicle from the virtual drive force output from the drive system model 223, the calculated traveling resistance, and the dynamic characteristics of the virtual vehicle. The vehicle and environment model 224 outputs the virtual acceleration from the acceleration and deceleration operation of the virtual vehicle. The parameter 201 that may be changed according to the target virtual vehicle in the vehicle and environment model 224 is, for example, the vehicle weight, the tire diameter, and a CD value.

It is possible to configure the vehicle model 200 as described above. The vehicle model 200 shown in FIG. 4 is an example. It is also possible to configure a part of the vehicle model 200 in more detail according to an event to be emphasized. For example, a case is considered in which a shock or a response accompanying shifts in a gear and a clutch of a transmission at a time of kick down is to be emphasized. In this case, the transmission model 222 may be configured to finely reproduce a gear mechanism, such as planetary and Ravigneaux, of the transmission, inertia of each component, a change in a transmission path due to engagement and disengagement of the clutch, and the like. On the other hand, when a calculation load in the vehicle model 200 is desired to be reduced, the transmission model 222 may be simply configured to reproduce only the gear ratio.

4.1.3 Modification Example of Coefficient Setting by Coefficient Setter

In the above description, an example of the setting of the coefficient a by the coefficient setter 122a is shown regarding the adjustment processing (refer to FIG. 9). In this example, the acceleration characteristic VAC of the battery electric vehicle 100 having the shape of the acceleration fluctuation in the acceleration characteristic of the target virtual vehicle is realized in all vehicle speed ranges (refer to FIG. 7). Further, since the acceleration characteristic indicates the acceleration when the accelerator operation amount is the maximum, the acceleration characteristic is considered up to the maximum accelerator operation amount in this example. On the other hand, depending on a magnitude of the accelerator operation amount or the vehicle speed range in an acceleration scene requested by the driver, the virtual acceleration VG of the target virtual vehicle may be able to be realized as it is in the battery electric vehicle 100. With the setting of the coefficient a in consideration of this case further, it is possible to more faithfully reproduce the sense of acceleration of the target virtual vehicle. In the present embodiment, a first modification example or a second modification example described below may be employed for the setting of the coefficient a by the coefficient setter 122a.

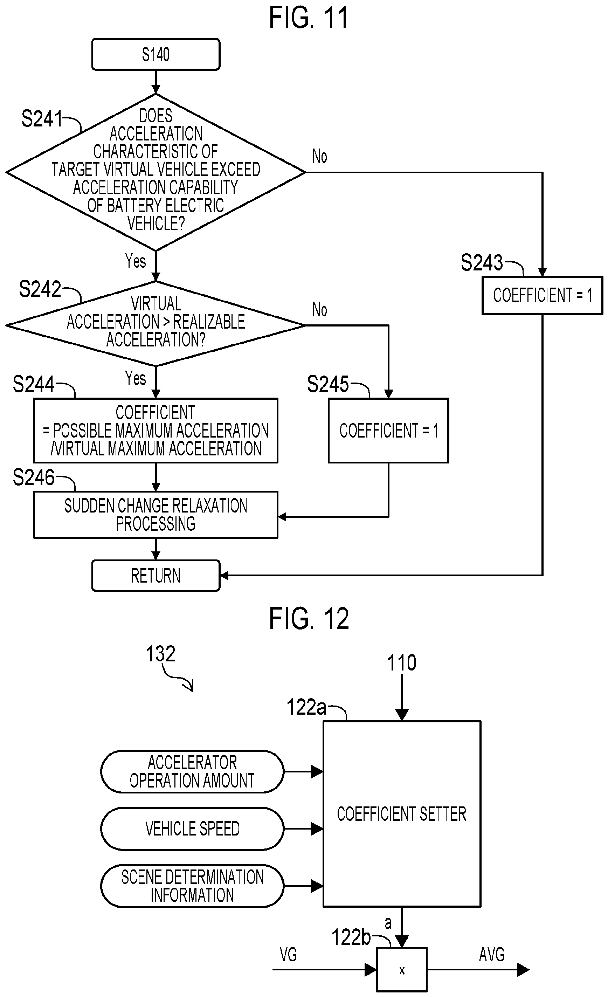

In the first modification example, the coefficient a is set to 1 while the virtual acceleration VG calculated by the virtual acceleration calculation unit 121 is realizable, regardless of the acceleration characteristic of the target virtual vehicle. The setting of the coefficient a by the coefficient setter 122a according to the first modification example will be described with reference to FIG. 11. FIG. 11 is a flowchart showing an example of the processing (processing related to step S140 shown in FIG. 8) executed by the coefficient setter 122a when the first modification example is employed.

In step S241, the coefficient setter 122a determines whether or not the acceleration characteristic of the target virtual vehicle exceeds the acceleration capability of the battery electric vehicle 100. When the acceleration characteristic of the target virtual vehicle exceeds the acceleration capability of the battery electric vehicle 100 (Yes in step S241), the processing proceeds to step S242. When the acceleration characteristic of the target virtual vehicle does not exceed the acceleration capability of the battery electric vehicle 100 (No in step S241), the coefficient setter 122a sets the coefficient a to 1 (step S243).

In step S242, the coefficient setter 122a determines whether or not the virtual acceleration VG calculated by the virtual acceleration calculation unit 121 is larger than the acceleration that can be realized by the battery electric vehicle 100. That is, determination is made whether or not the battery electric vehicle 100 can realize the virtual acceleration VG. When the battery electric vehicle 100 cannot realize the virtual acceleration VG (Yes in step S242), the coefficient setter 122a sets the coefficient a to possible maximum acceleration/virtual maximum acceleration (step S244). Thereafter, the processing proceeds to step S246. On the other hand, when the battery electric vehicle 100 can realize the virtual acceleration VG (No in step S242), the coefficient setter 122a sets the coefficient a to 1 (step S245). Thereafter, the processing proceeds to step S246.

In step S246, the coefficient setter 122a executes sudden change relaxation processing. The sudden change relaxation processing relaxes a sudden change in a value of the coefficient a when the set value of the coefficient a is switched. For example, when the set value of the coefficient a is switched from 1 to possible maximum acceleration/virtual maximum acceleration, the value of the coefficient a is gradually changed from 1 to possible maximum acceleration/virtual maximum acceleration. With the sudden change relaxation processing, it is possible to suppress the sudden change in the adjusted virtual acceleration AVG and the target drive force.

As described above, according to the first modification example, the coefficient a is set to 1 while the battery electric vehicle 100 can realize the virtual acceleration VG. That is, the adjustment unit 122 sets, as the adjusted virtual acceleration AVG, the virtual acceleration VG as it is. Accordingly, in a region where the virtual acceleration VG is realizable, it is possible to reproduce the acceleration characteristic of the target virtual vehicle as it is. That is, the driver can sense both the shape of the fluctuation in the acceleration of the target virtual vehicle and the magnitude of the acceleration.

Next, the second modification example of the setting of the coefficient a by the coefficient setter 122a will be described. In the second modification example, the value of the coefficient a is changed based on the accelerator operation amount of the accelerator pedal 22 and the vehicle speed of the battery electric vehicle 100 when the acceleration characteristic of the target virtual vehicle exceeds the acceleration capability of the battery electric vehicle 100.

In driving in which the accelerator operation amount is small and a gentle acceleration is to be performed, a situation hardly occurs in which the virtual acceleration VG exceeds the realizable acceleration of the battery electric vehicle 100. On the other hand, in driving in which the accelerator operation amount is large and a strong acceleration is to be performed, the virtual acceleration VG is expected to exceed the realizable acceleration of the battery electric vehicle 100. Therefore, the coefficient setter 122a according to the second modification example is configured to set the value of the coefficient a according to the following policies (1) to (3) based on the accelerator operation amount.

(1) When the accelerator operation amount is smaller than a first threshold value, determination is made that the gentle acceleration is performed, and the coefficient a is set to 1.

(2) When the accelerator operation amount is equal to or larger than a second threshold value, determination is made that strong acceleration is performed, and the value of the coefficient a is set such that the virtual acceleration VG is within the acceleration capability of the battery electric vehicle 100.

(3) When the accelerator operation amount is equal to or larger than the first threshold value and smaller than the second threshold value, determination is made as to whether or not the further strong acceleration is expected to be performed from a traveling scene of the battery electric vehicle 100. When the strong acceleration is expected to be performed (for example, at a time of start acceleration and at a time of kick down), the value of the coefficient a is set such that the virtual acceleration VG is within the range of the acceleration capability of the battery electric vehicle 100. Otherwise, the coefficient a is set to 1.

Further, the vehicle speed of the battery electric vehicle 100 is related to a magnitude of a difference, when the acceleration characteristic of the target virtual vehicle exceeds the acceleration capability of the battery electric vehicle 100, between the acceleration characteristic thereof and the acceleration capability thereof. For example, in the example shown in FIG. 7, the difference between the acceleration characteristics of the target virtual vehicle and the acceleration capability of the battery electric vehicle 100 is large in a low vehicle speed range and a high vehicle speed range. On the other hand, in a middle vehicle speed range, the difference between the acceleration characteristic of the target virtual vehicle and the acceleration capability of the battery electric vehicle 100 is small. Therefore, in the above policies, the coefficient setter 122a according to the second modification example can be further configured to set the value of the coefficient a according to the vehicle speed range of the vehicle speed of the battery electric vehicle 100. For example, when the vehicle speed of the battery electric vehicle 100 is in the low vehicle speed range or the high vehicle speed range, the coefficient setter 122a sets the value of the coefficient a to possible maximum acceleration/virtual maximum acceleration. On the other hand, when the vehicle speed of the battery electric vehicle 100 is in the middle vehicle speed range, the coefficient setter 122a sets the value of the coefficient a to a value larger than possible maximum acceleration/virtual maximum acceleration.

FIG. 12 is a diagram showing an example of the coefficient setter 122a according to the second modification example. In the example shown in FIG. 12, as compared with the case shown in FIG. 6, the accelerator operation amount of the accelerator pedal 22, the vehicle speed of the battery electric vehicle 100, and scene determination information are further input to the coefficient setter 122a. The scene determination information is related to the above policy (3) and for determining the traveling scene of the battery electric vehicle 100. The scene determination information is acquired by estimating the traveling environment around the battery electric vehicle 100 by using the camera, the LiDAR, the radar, the rudder angle sensor, map information, GPS, and the like. For example, when information such as "there is no vehicle in front", "a road is a straight line", "a road width is wide", and "a traffic light in front is blue" is acquired from the scene determination information, the coefficient setter 122a determines that there is a traveling scene in which the strong acceleration is expected to be performed when the accelerator operation amount is equal to or larger than the first threshold value.

As described above, according to the second modification example, when the acceleration characteristic of the target virtual vehicle exceeds the acceleration capability of the battery electric vehicle 100, the value of the coefficient a is changed based on the accelerator operation amount of the accelerator pedal 22 and the vehicle speed of the battery electric vehicle 100. Accordingly, it is possible to reproduce the sense of acceleration of the target virtual vehicle in a wider scene in consideration of the acceleration scene requested by the driver.

## 5 Sound Control Device

The control device 101 according to the present embodiment may function, regarding the control of the battery electric vehicle 100, as a sound control device that controls the in-vehicle speaker 21 to output the pseudo engine sound according to the target virtual vehicle. Specifically, the processing circuit 102 executes the computer program 104 for the in-vehicle speaker control, which is stored in the storage device 103, to cause the control device 101 to function as the sound control device. In the following, the control of the battery electric vehicle 100 by the sound control device will be described.

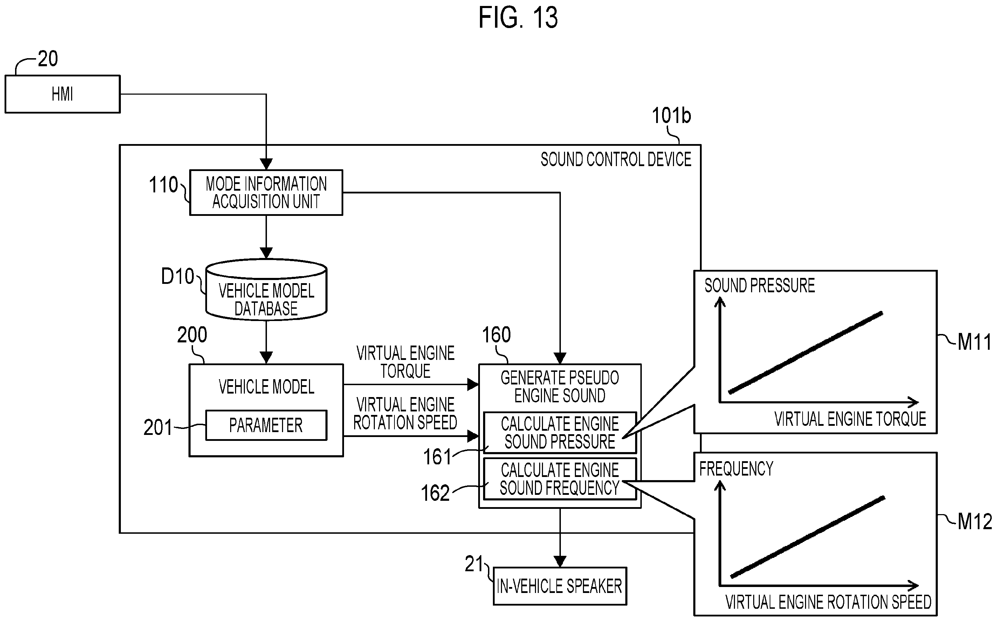

FIG. 13 is a diagram showing a functional configuration of a sound control device 101b. The sound control device 101b generates, from the in-vehicle speaker 21, the pseudo engine sound that simulates an engine sound in the virtual vehicle including the internal combustion engine.

The mode information acquisition unit 110 transmits the information of the selected control mode and the information of the target virtual vehicle to a pseudo engine sound generation unit 160.

The pseudo engine sound generation unit 160 functions when the control mode is the on-demand mode and the target virtual vehicle is the virtual vehicle including the internal combustion engine. In this case, in the sound control device 101b, the vehicle model 200 (target vehicle model) of the target virtual vehicle is read out from the vehicle model database D10 based on the information of the target virtual vehicle from the mode information acquisition unit 110. Further, the parameter 201 is set according to the target virtual vehicle. The pseudo engine sound generation unit 160 generates the pseudo engine sound based on the virtual engine torque and the virtual engine rotation speed, which are calculated using the target vehicle model.

The pseudo engine sound generation unit 160 refers to the storage device 103 to acquire a sound source of the pseudo engine sound related to the target virtual vehicle. The storage device 103 may store the sound source of the pseudo engine sound related to each virtual vehicle including the internal combustion engine.

The pseudo engine sound generation unit 160 includes processing 161 of calculating an engine sound pressure and processing 162 of calculating an engine sound frequency. In the processing 161, a sound pressure of the pseudo engine sound is calculated from the virtual engine torque using a sound pressure map M11. The sound pressure map M11 is created such that the sound pressure is higher as the virtual engine torque is higher. In the processing 162, a frequency of a virtual engine sound is calculated from the virtual engine rotation speed by using a frequency map M12. The frequency map M12 is created such that the frequency is higher as the virtual engine rotation speed is higher. The virtual engine torque and the virtual engine rotation speed change by the operation of the driving operation member by the driver.

The sound control device 101b outputs, from the in-vehicle speaker 21, the pseudo engine sound generated by the pseudo engine sound generation unit 160. With the sound control related to the pseudo engine sound by the sound control device 101b in this manner, it is possible to further provide the driver with a sense of reality as if the driver drives the target virtual vehicle when the control mode is the on-demand mode.

## 6 Display Control Device

The control device 101 according to the present embodiment may function, when the control mode is the on-demand mode, as a display control device that controls the HMI 20 to display the virtual engine rotation speed or the virtual gear stage of the target virtual vehicle. Accordingly, it is possible to further provide the driver with the sense of reality as if the driver drives the target virtual vehicle.

## 7 Others

The battery electric vehicle 100 according to the above embodiment is an FF vehicle in which the front tire-wheel assemblies are driven by one electric motor 2. However, the technical features according to the present embodiment can also be applied to a battery electric vehicle in which two electric motors are disposed in front and rear of the vehicle and respectively drive front tire-wheel assemblies and rear tire-wheel assemblies. Further, the technical features can also be applied to a battery electric vehicle including an in-wheel motor in each tire-wheel assembly.

The technical features according to the present embodiment are not limited to the battery electric vehicle, and can be widely applied to the battery electric vehicle using the electric motor as a power device for traveling. For example, the technical features according to the present embodiment can be applied to a hybrid electric vehicle (HEV) or a plug-in hybrid electric vehicle (PHEV) having a mode in which the vehicle travels solely by the drive force of the electric motor. Further, the technical features can be applied to a fuel cell electric vehicle (FCEV) that supplies electric energy generated by a fuel cell to the electric motor.

**Claims**

1.  A battery electric vehicle (100) comprising:

    an electric motor (2) as a drive source;
    a driving operation member (22, 24) used for driving of the battery electric vehicle (100);
    a storage device (103) configured to store a database, the database being configured to manage a plurality of vehicle models obtained by modeling a plurality of virtual vehicles having different acceleration characteristics in response to a driving operation of a driver; and
    a processing circuit (102) configured to
    read out a target vehicle model corresponding to a target virtual vehicle from the database, the target virtual vehicle being selected by the driver from the virtual vehicles,
    calculate a virtual acceleration of the target virtual vehicle in response to an operation of the driving operation member (22, 24) using the target vehicle model based on an operation state of the driving operation member (22, 24) and a traveling state of the battery electric vehicle (100),
    execute adjustment processing of calculating an adjusted virtual acceleration by multiplying the virtual acceleration by a coefficient of 1 or less according to the acceleration characteristic of the target virtual vehicle, and
    control the electric motor (2) such that an acceleration of the battery electric vehicle (100) is the adjusted virtual acceleration.

2.  The battery electric vehicle (100) according to claim 1, wherein in the adjustment processing, the processing circuit (102) is configured to set the coefficient to a value obtained by dividing a realizable maximum acceleration of the battery electric vehicle (100) by a maximum acceleration in the acceleration characteristic of the target virtual vehicle when the acceleration characteristic of the target virtual vehicle exceeds an acceleration capability of the battery electric vehicle (100).

3.  The battery electric vehicle (100) according to claim 1, wherein in the adjustment processing, the processing circuit (102) is configured to set the coefficient to 1 when the acceleration characteristic of the target virtual vehicle does not exceed an acceleration capability of the battery electric vehicle (100).

4.  The battery electric vehicle (100) according to claim 1, wherein in the adjustment processing, the processing circuit (102) is configured to set the coefficient to 1 while the virtual acceleration is realizable by the battery electric vehicle (100), regardless of the acceleration characteristic of the target virtual vehicle.

5.  The battery electric vehicle (100) according to claim 1, wherein:

    the driving operation member (22, 24) includes an accelerator pedal (22); and
    in the adjustment processing, the processing circuit (102) is configured to change a value of the coefficient based on an accelerator operation amount of the accelerator pedal (22) and a vehicle speed of the battery electric vehicle (100) when the acceleration characteristic of the target virtual vehicle exceeds an acceleration capability of the battery electric vehicle (100).

6.  The battery electric vehicle (100) according to any one of claims 1 to 5, wherein the processing circuit (102) is configured to

    calculate a target drive force of the battery electric vehicle (100) to set the acceleration of the battery electric vehicle (100) to the adjusted virtual acceleration, and
    change a motor torque output by the electric motor (2) to provide the target drive force to the battery electric vehicle (100).

7.  The battery electric vehicle (100) according to any one of claims 1 to 5, wherein:

    each of the vehicle models has one or a plurality of parameters related to the acceleration characteristic; and
    the processing circuit (102) is further configured to set the one or the plurality of parameters of the target vehicle model according to the target virtual vehicle.

# FIG. 1

EP 4 606 623 A1

# FIG. 2

```
                    ┌──────────────┐        ┌──────────────┐
                  ┌→│ CONTROL MODE │──────┬→│ NORMAL MODE  │
                  │ └──────────────┘      │ └──────────────┘
                  │                       │
                  │                       │ ┌───────────────┐
  ╭─────────╮     │                       └→│ON-DEMAND MODE │
  │ SETTING │     │                         └───────────────┘
  │  MENU   │─────┤
  ╰─────────╯     │
                  │ ┌────────────────┐     ┌──────────┐      ┌──────────────────┐
                  └→│ TARGET VIRTUAL │───┬→│   CONV   │────┬→│ VIRTUAL VEHICLE  │
                    │    VEHICLE     │   │ └──────────┘    │ │        A1        │
                    └────────────────┘   │                 │ └──────────────────┘
                                         │                 │ ┌──────────────────┐
                                         │                 ├→│ VIRTUAL VEHICLE  │
                                         │                 │ │        A2        │
                                         │                 │ └──────────────────┘
                                         │                 │ ┌──────────────────┐
                                         │                 └→│ VIRTUAL VEHICLE  │
                                         │                   │        B1        │
                                         │                   └──────────────────┘
                                         │ ┌──────────┐      ┌──────────────────┐
                                         └→│   HEV    │────┬→│ VIRTUAL VEHICLE  │
                                           └──────────┘    │ │        C1        │
                                                           │ └──────────────────┘
                                                           │ ┌──────────────────┐
                                                           └→│ VIRTUAL VEHICLE  │
                                                             │        C2        │
                                                             └──────────────────┘
```

# FIG. 3

EP 4 606 623 A1

# FIG. 4

# FIG. 5

# FIG. 6

EP 4 606 623 A1

# FIG. 7

ACCELERATION

ACCELERATION CHARACTERISTIC
OF TARGET VIRTUAL VEHICLE

VIRTUAL MAXIMUM
ACCELERATION

$$\text{x} \frac{\text{POSSIBLE MAXIMUM ACCELERATION}}{\text{VIRTUAL MAXIMUM ACCELERATION}}$$

ACCELERATION CHARACTERISTIC
OF NORMAL BEV
(ACCELERATION CHARACTERISTIC
OF BATTERY ELECTRIC VEHICLE)

POSSIBLE MAXIMUM
ACCELERATION

VAC

VEHICLE SPEED

EP 4 606 623 A1

## FIG. 8

```
                    START

S110
          ACQUIRE VARIOUS TYPES OF INFORMATION

S120
          READ OUT TARGET VEHICLE MODEL

S130
          CALCULATE VIRTUAL ACCELERATION

S140
          SET COEFFICIENT

S150
          CALCULATE ADJUSTED VIRTUAL ACCELERATION

S160
          CALCULATE TARGET DRIVE FORCE

                     END
```

## FIG. 9

```
                    S140

S141        DOES
        ACCELERATION
       CHARACTERISTIC OF
  TARGET VIRTUAL VEHICLE EXCEED          No
   ACCELERATION CAPABILITY
     OF BATTERY ELECTRIC
          VEHICLE?

              Yes

S142                              S143
     COEFFICIENT
= POSSIBLE MAXIMUM ACCELERATION      COEFFICIENT = 1
 /VIRTUAL MAXIMUM ACCELERATION

           RETURN
```

# FIG. 10

200

210

**CONTROL MODEL**

ACCELERATOR OPERATION AMOUNT →

VEHICLE SPEED →

TARGET VIRTUAL DRIVE FORCE CALCULATION UNIT — 211

REQUEST OUTPUT CALCULATION UNIT — 212

220

**PLANT MODEL**

221 — INTERNAL COMBUSTION ENGINE MODEL

222 — TRANSMISSION MODEL

223 — DRIVE SYSTEM MODEL

224 — VEHICLE AND ENVIRONMENT MODEL

VIRTUAL ENGINE ROTATION SPEED

VIRTUAL ENGINE TORQUE

VIRTUAL ACCELERATION

# FIG. 11

S140

S241 — DOES ACCELERATION CHARACTERISTIC OF TARGET VIRTUAL VEHICLE EXCEED ACCELERATION CAPABILITY OF BATTERY ELECTRIC VEHICLE?

No → S243 — COEFFICIENT = 1

Yes ↓

S242 — VIRTUAL ACCELERATION > REALIZABLE ACCELERATION?

No → S245 — COEFFICIENT = 1

Yes ↓

S244 — COEFFICIENT = POSSIBLE MAXIMUM ACCELERATION / VIRTUAL MAXIMUM ACCELERATION

S246 — SUDDEN CHANGE RELAXATION PROCESSING

RETURN

# FIG. 12

132

122a

110

ACCELERATOR OPERATION AMOUNT

VEHICLE SPEED

SCENE DETERMINATION INFORMATION

COEFFICIENT SETTER

122b

VG

a

x

AVG

# FIG. 13

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/322094 A1 (VAN NUS WARREN [US]) 12 October 2023 (2023-10-12) * paragraphs 34-37, 39, 44, 46, 50-62, 65, 66, 68, 81, 101-103, 108, 109, 111; figures 1, 3, 4, 7, 10-12 * ----- | 1-7 | INV. B60L15/20 B60W50/08 |
| X | US 2019/118815 A1 (JORDAN III DALE F [US] ET AL) 25 April 2019 (2019-04-25) * paragraphs [0010], [0014], [0019] - [0022]; figures 1, 2 * ----- | 1-4,6,7 | |
| X | US 2021/053487 A1 (VANGELOV JOHN NAUM [US] ET AL) 25 February 2021 (2021-02-25) * paragraphs [0017], [0027], [0032] - [0038], [0047], [0048], [0050], [0052] - [0054]; figures 1-3 * ----- | 1,4-7 | |

**TECHNICAL FIELDS SEARCHED (IPC)**

B60L
B60W

The present search report has been drawn up for all claims

| Place of search | Date of completion of the search | Examiner |
|---|---|---|
| The Hague | 14 July 2025 | Bronski, Bartlomiej |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 5627

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2025

| Patent document cited in search report | Publication date | Patent family member(s) | | Publication date |
|---|---|---|---|---|
| US 2023322094 A1 | 12-10-2023 | EP | 4496726 A1 | 29-01-2025 |
| | | JP | 2025509474 A | 11-04-2025 |
| | | US | 2023322094 A1 | 12-10-2023 |
| | | WO | 2023183849 A1 | 28-09-2023 |
| US 2019118815 A1 | 25-04-2019 | CN | 109697915 A | 30-04-2019 |
| | | DE | 102018125906 A1 | 25-04-2019 |
| | | US | 2019118815 A1 | 25-04-2019 |
| US 2021053487 A1 | 25-02-2021 | CN | 112406847 A | 26-02-2021 |
| | | DE | 102020121794 A1 | 25-02-2021 |
| | | US | 2021053487 A1 | 25-02-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   JP 6787507 B